# EUROPEAN PATENT APPLICATION

(11) **EP 4 779 192 A1**
(43) Date of publication of application: **22.07.2026**
(21) Application number: 26151614.0
(22) Date of filing: 13.01.2026
(51) Int. Cl.: F16L 55/179, B25B 13/50, F16L 55/18

(54) **APPARATUS FOR REMOVING A FERRULE FROM A PRESSURISED WATER MAIN**

(30) Priority: 15.01.2025 GB 202500533
(71) Applicant: Bitmac Limited, Plymouth PL6 8LT (GB)
(72) Inventor: PHILLIPS, Barry, St Austell, PL26 7UJ (GB)
(74) Representative: Noble, Frederick

(57) **Abstract**

Apparatus is provided for removing a ferrule (71) from a pressurised pipe (70). The apparatus comprises: a housing (3) having a formation (18) at one end. The formation (18) is adapted to engage, in use, with a complementary formation (83) on a pipe sealing device (80). An internal member (2) is mounted on the housing (3) and has a first portion (9) located within the housing (3) and a second portion (5) external of the housing (3). The first portion comprises a ferrule engagement portion (9) and the second portion (5) comprising an operating tool engagement formation (6). The internal member (2) is movable relative to the housing (3) between a disengaged position in which a terminal end (8) of the first portion is located within the housing (3) and an engaged position in which the ferrule engagement portion (9) engages with a ferrule (71) on a pipe (70), in use.

## Description

The present invention relates to apparatus for removing an existing water connection from a pressurised water main and especially, but not solely, for removing a ferrule from a pressurised water main.

### BACKGROUND TO THE INVENTION

Water mains pipes when they are installed frequently have threaded ferrules. These ferrules were historically installed where necessary to enable water service pipes to be connected to the water main, by the means of drilling and tapping.

From time-to-time service pipes (the pipes which supply individual buildings from the main) will need to be replaced. When the service pipe needs to be replaced, typically the ferrule which connects it to the main will also need to be replaced as it will have degraded over time and is likely to be damaged when the old service pipe is removed, and so cannot be used to connect a new service pipe.

When connecting a new service pipe to an existing water main, the existing ferrule cannot simply be removed, as the existing mains water pipe is live and pressurised. Historically to enable the new ferrule connection the water main has to be switched off to depressurise the main. Therefore, before replacing the ferrule, the water supply to the existing water main has to be turned off. This has the disadvantage of all supplies connected to that main being disconnected. This is at best inconvenient for customers.

It is an object of the present invention to reduce or substantially obviate the aforementioned problems. This results in substantial cost savings for the water authority.

### STATEMENT OF INVENTION

In accordance with a first aspect of the present invention, there is provided apparatus for removing a existing ferrule from a pressurised water main, the apparatus comprising: a housing having a formation at one end, the formation being adapted to engage, in use, with a complementary formation on a pipe sealing device; an internal member mounted on the housing and having a first portion at one end and a second portion at an opposite end, the first portion comprising a ferrule engagement portion and the second portion comprising an operating tool engagement formation, and wherein the internal member is movable relative to the housing between a first position in which a terminal end of the first portion is located within the housing and a second position in which the ferrule engagement portion engages with a ferrule on a pipe, in use.

In accordance with a second aspect of the present invention, there is provided a method for removing a ferrule from a pressurised pipe, the method comprising:
a. providing apparatus as described and claimed;
b. coupling the ferrule engagement portion of the internal member of the apparatus to the ferrule;
c. installing a pipe sealing device on the pressurised pipe so that the pipe sealing device is located on the pipe around the ferrule;
d. engaging the formation of the housing with a complementary formation on the pipe sealing device;
e. removing the ferrule from the pressurised pipe using the internal member;
f. moving the internal member to the first position with the ferrule still coupled to the ferrule engagement portion;
g. inserting a sealing device into the pipe sealing device to isolate the pressurised pipe from the apparatus; and
h. disengaging the housing from the pipe sealing device to remove the apparatus and the ferrule from the pipe sealing device.

The apparatus may further comprise a securing member adapted to secure the ferrule engagement portion to the ferrule, in use. For example, the securing member may be inserted through a side wall of the ferrule engagement portion to secure the ferrule to the ferrule engagement portion. In one example, the securing member may be a threaded member, such as a grub screw.

Preferably, the housing comprises a housing operating tool engagement formation. This may permit the housing to be engaged by an operating tool to cause the formation to be engaged, in use, with the complementary formation on the pipe sealing device.

Typically, the housing further comprises an aperture in a side wall of the housing to permit fluid communication between the inside of the housing and the outside of the housing, the aperture comprising an engagement formation adapted to permit a pressure indicating device to be coupled to the aperture, in use.

Typically, a sealing member is located between the internal member and the housing. The sealing member may comprise a rubber sealing member. The sealing member may comprise an O-ring.

Preferably, the internal member is sealingly mounted on the housing by means of the sealing member.

Typically, the internal member is slidably movable relative to the housing.

Preferably, the housing and the internal member are relatively rotatable.

Typically, the internal member comprises an elongate member. Preferably, the first portion is adjacent one end of the elongate member and the second portion is adjacent the opposite end of the elongate member. In one example of the invention, the elongate member may be in the form of a shaft that interconnects the first and second portions.

Preferably, the internal member is removable from the housing.

The internal member may be removed from the housing prior to step (b). If the internal member is removed from the housing prior to step (b), or is otherwise not mounted on the housing prior to step (b), typically, the internal member is inserted into the housing prior to step (d).

Preferably, the internal member is mounted within the housing.

When the internal member is in the second position, the terminal end of the first portion may be external of the housing.

Typically, the method further comprises coupling another pipe to the complementary formation on the pipe sealing device, and removing the sealing device from the pipe sealing device to permit fluid from the pressurised pipe to flow into the other pipe, typically a new service pipe for supplying a building from the main.

Preferably, the other pipe is coupled to the pipe sealing device by means of a valve, which is movable between a closed position in which fluid is prevented from flowing from the pressurised pipe into the other pipe and an open position in which fluid flows from the pressurised pipe into the other pipe.

The pressurised pipe may be a water pipe, such as a water main.

### BRIEF DESCRIPTION OF THE DRAWINGS

An example of apparatus for and a method of removing a ferrule from a pressurised pipe will now be described with reference to the accompanying drawings, in which:
Fig. 1 shows a perspective view of apparatus for removing a ferrule from a water main pipe in a first position;
Fig. 2 is a cross-sectional view of the apparatus shown in Fig. 1 in the first position;
Fig. 3 is a partial cross-sectional perspective view of the apparatus shown in Fig. 2 in the first position;
Fig. 4 is a cross-sectional view of the apparatus shown in Fig. 1 in a second position;
Fig. 5 is a partial cross-sectional perspective view of the apparatus shown in Fig. 4 in the second position;
Fig. 6 is a perspective view of the apparatus in the first position and installed on a strap coupler coupled to a mains water pipe with a sealing plate removed from the strap coupler;
Fig. 7 is a cross-sectional view of the apparatus, coupler and pipe shown in Fig. 6 with the apparatus in the second position;
Fig. 8 is a partial cross-sectional perspective view of the apparatus, coupler and pipe shown in Fig. 6 with the apparatus in the second position;
Fig. 9 is a perspective view of the apparatus, coupler and pipe shown in Fig. 6 with the apparatus in the first position and the sealing plate inserted into the coupler;
Fig. 10 is a partial cross-sectional perspective view of the apparatus, coupler and pipe shown in Fig. 9; and
Fig. 11 is a cross-sectional view of the apparatus, coupler and pipe shown in Fig. 9.

### DESCRIPTION OF PREFERRED EMBODIMENTS

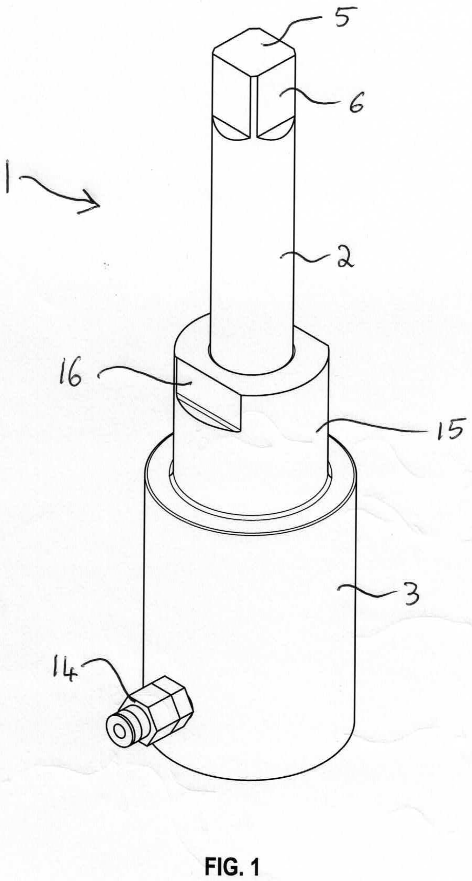

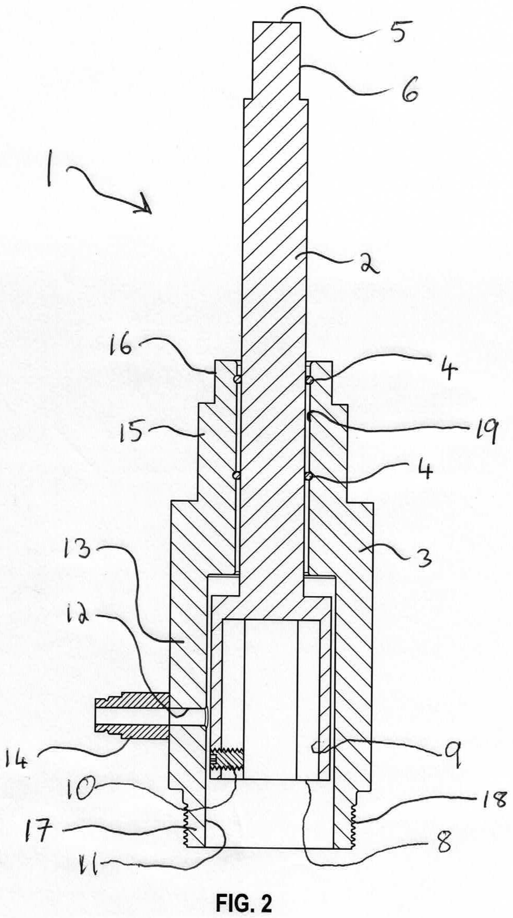

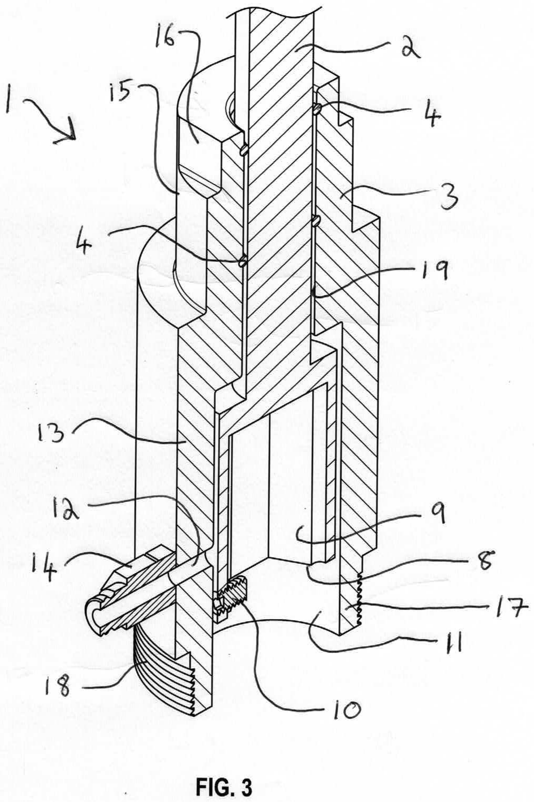

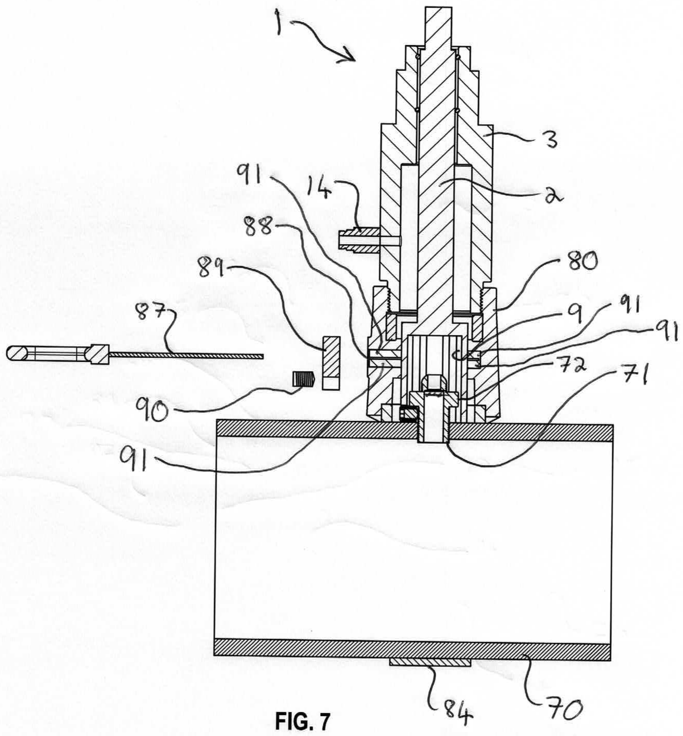

Figs. 1 to 3 show apparatus 1 for removing a ferrule 71 from a mains water pipe 70 (see Fig. 7). The apparatus 1 comprises a mandrel 2 slidably and rotatably mounted within a housing 3. The mandrel 2 is mounted on the housing 3 by means of two O-rings 4 located in an upper end 15 of the housing 3. The O-rings 4 enable the mandrel 2 to be rotated relative to the housing 3 as well as slidably moved relative to the housing 3 along a longitudinal axis 7 of the apparatus 1. The O-rings 4 also provide a seal between the mandrel 2 and the housing 3.

The upper end 15 of the housing 3 has flat sections 16 which permit a tool (not shown), such as a wrench, to be engaged with the housing 3.

An outer end 5 of the mandrel has a square formation 6. The square formation 6 enables the mandrel 2 to be engaged by a tool (not shown), such as a wrench, to facilitate rotation of the mandrel 2 relative to the housing 3.

An inner end 8 of the mandrel 2 has a hexagonal socket 9 formed thereon which can be engaged with a hexagonal formation 72 on the ferrule 71. Threadedly mounted in a side wall of the hexagonal socket 9 is a grub screw 10, which can be screwed in and out of the side wall of the socket 9.

When the mandrel 2 is located in a first position relative to the housing 3, as shown in Figs. 1 to 3, the socket 9 is located within a recess 11 in the housing 3. The housing 3 also includes a through bore 12 in a side wall 13 of the housing 3 that permits fluid communication between the recess 11 and the outside of the housing 3. The through bore 12 therefore forms a fluid port. Mounted on the outside of the housing 3 on the through bore 12 is a coupling member 14 which permits a pressure gauge (not shown) to be coupled to the through bore 12 via the coupling member 14 to measure the pressure within the recess 11.

A lower end 17 of the side wall 13 has an external threaded section 18.

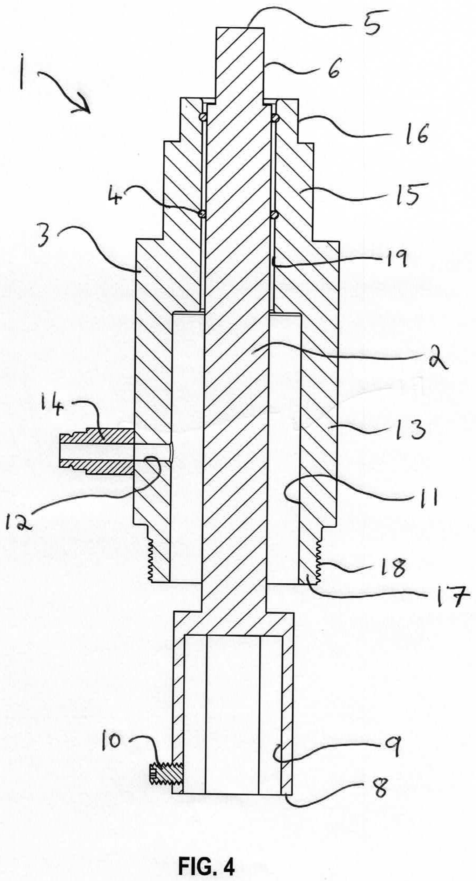

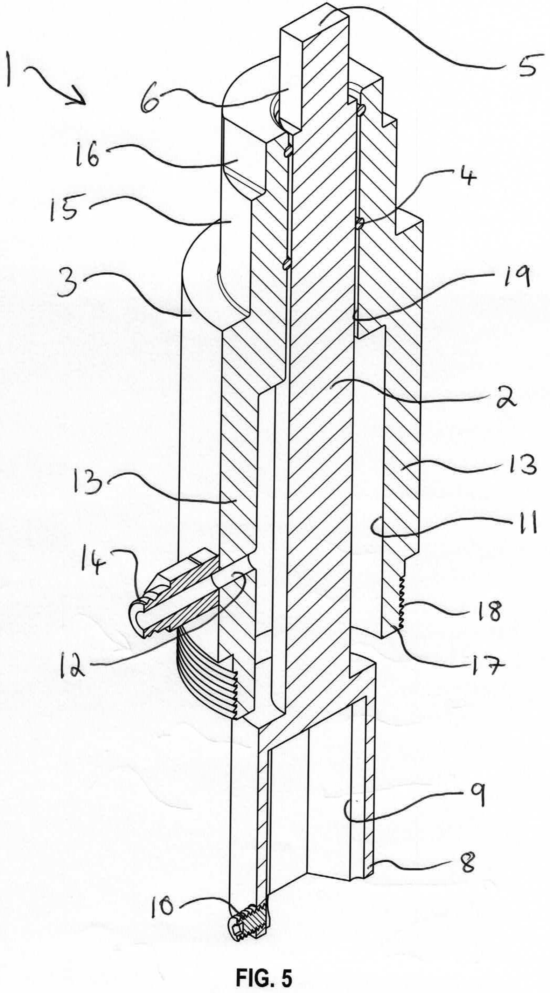

The mandrel 2 can be slid relative to the housing 3 from the position shown in Figs. 1 to 3 to an extended position, as shown in Figs 4 and 5, in which the socket 9 is located outside of the recess 11. It is also possible to completely remove the mandrel 2 from the housing 3 by sliding the mandrel 2 out of the upper section 15 and removing it from the recess 11. The mandrel 2 can be reinserted into the housing by inserting the end 5 into the recess 11 and pushing it into the central bore 19 so that the end 5 extends out of the upper end 15 of the housing 3.

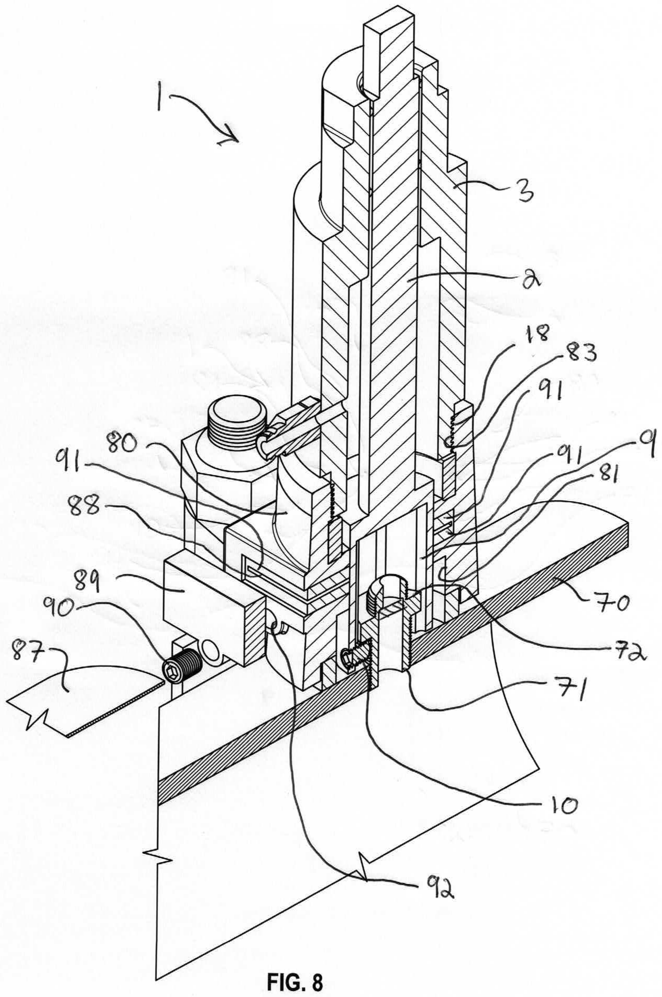

In use, the apparatus 1 is used to remove the ferrule 71 from the mains water pipe 70. Initially the mandrel 2 is moved to the second position shown in Figs 4 and 5 or alternatively, can be completely removed from the housing 3. The hexagonal socket 9 is then engaged with a complimentary hexagonal formation 72 on the ferrule 71. After the hexagonal socket 9 is slid over the formation 72, the grub screw 10 is then turned to screw the grub screw 10 into the socket 9 and under the formation 72, as shown in Figs. 7 and 8. This secures the ferrule 71 to the socket 9.

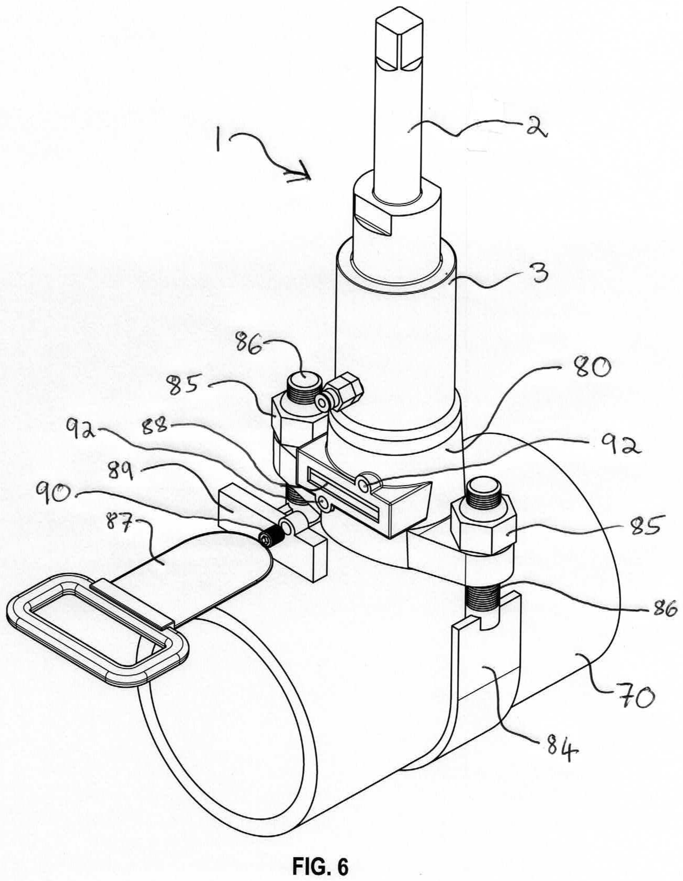

After the socket 9 is secured to the ferrule 71, a strap coupler 80 is placed on the pipe 70 (see Fig. 6) over the mandrel 2 and the ferrule 71 so that the mandrel 2 is located centrally within an internal recess 81 of the coupler 80. The coupler 80 has a sealing member 82 which facilitates the sealing of the coupler 80 onto the external surface of the pipe 70. The housing 3 is then slid down the mandrel 2 until the threaded section 18 engages with a complementary threaded formation 83 in the coupler 80. The housing 3 is then screwed into the threaded formation 83 and tightened onto the coupler 80 using a wrench engaged with the flat sections 16 of the housing 3.

The strap coupler 80 may be an existing commercially available strap coupler, such as a Hawle^{®} tapping saddle. For example, the strap coupler 80 may be a Hawle^{®} Universal shut-off tapping saddle with inner thread outlet ISO228.

Once the housing 3 is threaded onto the coupler 80, a strap 84 of the coupler is tightened using nuts 85 which engage with bolts 86 on each end of the strap 84. The tightening of the strap 84 pulls the coupler 80 into sealing engagement with the external surface of the pipe 70 by compressing the sealing member 82.

After the coupler 80 is tightened onto the pipe 70, a pressure gauge is connected to the coupling member 14.

With the coupler 80 sealingly engaged with the pipe 70, the housing 3 threaded onto the coupler 80 and the pressure gauge attached to the coupling member 14, the ferrule 71 is removed from the pipe 70 by rotating the mandrel 2. This is performed by engaging an appropriate tool, such as a wrench with the formation 6 and rotating it to rotate the mandrel 2. This rotates the ferrule 71 causing it to be unscrewed from the pipe 70.

Once the ferrrule 71 is unscrewed from the pipe 70, water under pressure will exit the pipe 70 through hole 72 from which the ferrule 71 has been removed and will pressurise the inside of the coupler 80 and the inside of the housing 3. This pressure will be indicated on the pressure gauge connected to the coupler 14.

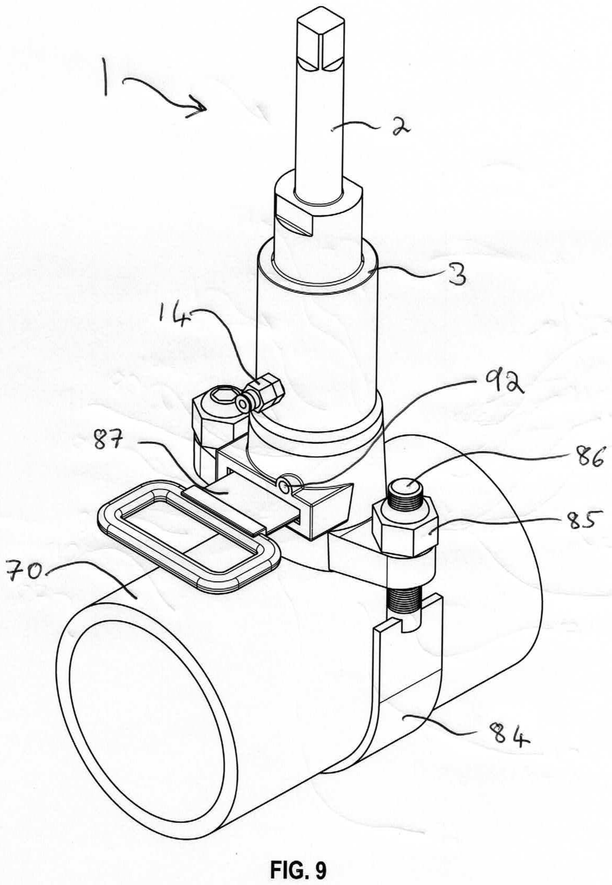

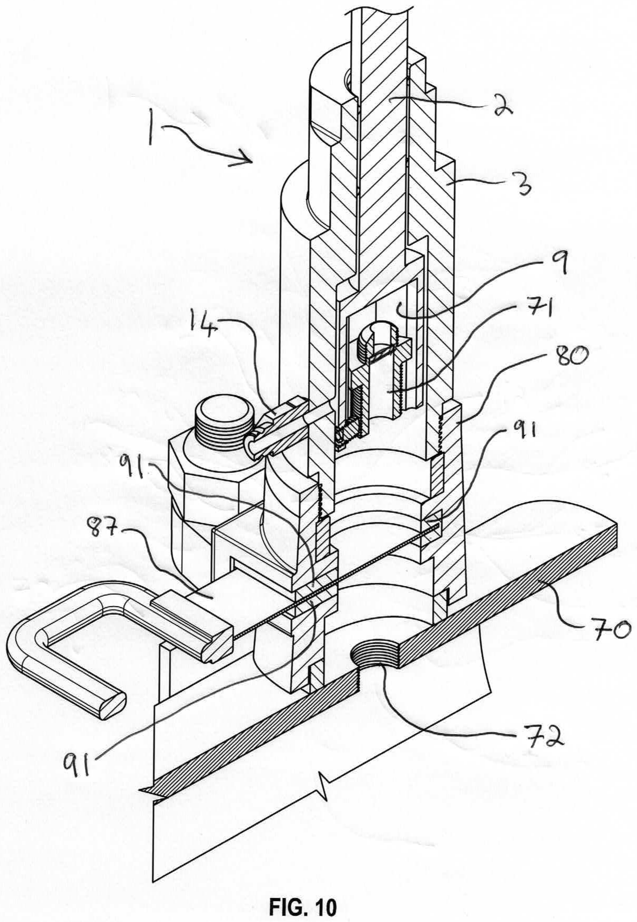

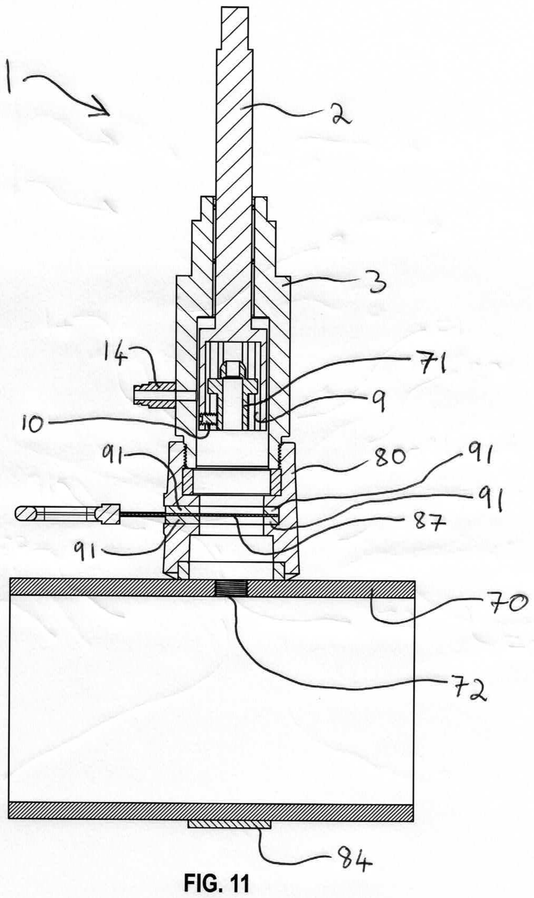

The mandrel 2 is then slid relative to the housing 3 to the first position in which the socket 9 is located within the recess 11, as shown in Figs. 9 to 11. When the mandrel 2 is in the first position, a sealing plate 87 is inserted into slot 88 in the coupler 80. The slot 88 is formed between two rubber packing elements 91. The rubber packing elements 91 provide a temporary seal to substantially prevent or mitigate leakage of water through the slot 88 between removal of the ferrule 71 from the pipe 70 and insertion of the plate 87 into the slot 88. The sealing plate 87 once it is inserted into the coupler 80, isolates the pressure below the plate 87 from the volume of the coupler 80 and the housing 3 above the plate 87. This enables the apparatus 1 to be removed from the coupler 80 by unthreading the housing 3 from the coupler 80, as the water pressure is isolated from the apparatus 1 by the pressure plate 87.

Also shown in Figs. 6 to 8 is a cover plate 89. The cover plate 89 provides a cover for the slot 88 after the plate 87 is removed from the slot 88, as explained in more detail below.

After the apparatus 1 is removed from the coupler 80 with the ferrule 71 attached to the socket 9 of the mandrel 2, a new water supply line (not shown) can be coupled to the pipe 70 by means of the thread 83 on the coupler 80. When the new supply line is fully coupled to the pipe 70 via the coupler 80, the sealing plate 87 is removed from the slot 88. This enables the cover plate 89 to be bolted onto the coupler 80, by threading the bolts 90 into holes 92. When the cover plate 89 is bolted onto the coupler 80, the cover plate 89 covers and seals the slot 88. After the sealing plate 87 has been removed from the slot 88, the rubber elements 91 provide a temporary seal to substantially prevent or mitigate leakage of water through the slot 88 before the cover plate 89 is attached to the coupler 80.

Once the sealing plate 87 is removed, water is permitted to flow along the new supply line from the pipe 70.

The cover plate 89 provides a long-term seal of the slot 88 after installation of the new water supply line. The cover plate 89 minimises the risk of contamination entering the coupler 80 through the slot 88 and hence, into the water supply. It also minimises the risk of water leakage from the slot 88. If necessary, the cover plate 89 can be subsequently removed from the coupler 80 by unbolting the bolts 90 and, if desired, the sealing plate 87 re-inserted into the slot 88.The invention has the advantage of enabling a new water supply line to be connected to an existing main 70 without having to shut off or interrupt the water supply to the existing mains water pipe 70. The embodiments described above are provided by way of example only, and various changes and modifications will be apparent to persons skilled in the art without departing from the scope of the present invention as defined by the appended claims.

## Claims

1. Apparatus for removing a ferrule from a pressurised pipe, the apparatus comprising:
a housing having a formation at one end, the formation being adapted to engage, in use, with a complementary formation on a pipe sealing device;
an internal member mounted in the housing and having a first portion at one end and a second portion at an opposite end, the first portion comprising a ferrule engagement portion and the second portion comprising an operating tool engagement formation;
a securing member adapted to secure the ferrule engagement portion to the ferrule, and
wherein the internal member is movable relative to the housing between a first position in which a terminal end of the first portion is located within the housing and a second position in which the ferrule engagement portion engages with a ferrule on a pipe, in use.

2. Apparatus according to claim 1, wherein the housing further comprises an aperture in a side wall of the housing to permit fluid communication between the inside of the housing and the outside of the housing, the aperture comprising an engagement formation adapted to permit a pressure indicating device to be coupled to the aperture, in use.

3. Apparatus according to claim 1 or claim 2, further comprising a sealing member located between the internal member and the housing, for example a rubber sealing member such as an O-ring.

4. Apparatus according to any of the preceding claims, wherein the internal member is slidably movable relative to the housing.

5. Apparatus according to any of the preceding claims, wherein the internal member is rotatably movable relative to the housing.

6. Apparatus according to any of the preceding claims, wherein the internal member is removable from the housing.

7. Apparatus according to any of the preceding claims, wherein the housing further comprises a housing operating tool engagement formation to permit the housing to be engaged by an operating tool, in use, to enable the formation to be engaged, in use, with the complementary formation on the pipe sealing device.

8. Apparatus according to any of the preceding claims, wherein the internal member comprises an elongate member.

9. Apparatus according to any of the preceding claims, wherein the internal member is mounted within the housing.

10. Apparatus according to any of the preceding claims, wherein when the internal member is in the second position, the terminal end of the first portion is external of the housing.

11. A method for removing a ferrule from a pressurised pipe, for example a water pipe, the method comprising:
a. providing apparatus according to any of the preceding claims;
b. coupling the ferrule engagement portion of the internal member of the apparatus to the ferrule;
c. installing a pipe sealing device on the pressurised pipe so that the pipe sealing device is located on the pipe around the ferrule;
d. engaging the formation of the housing with a complementary formation on the pipe sealing device;
e. removing the ferrule from the pressurised pipe using the internal member;
f. moving the internal member to the first position with the ferrule still coupled to the ferrule engagement portion;
g. inserting a sealing device into the pipe sealing device to isolate the pressurised pipe from the apparatus; and
h. disengaging the housing from the pipe sealing device to remove the apparatus and the ferrule from the pipe sealing device.

12. A method according to claim 11, wherein the internal member is removed from the housing prior to step (b).

13. A method according to claim 11 or claim 12, wherein step (d) further comprises inserting the internal member into the housing.

14. A method according to any of claims 11 to 13, further comprising coupling another pipe to the complementary formation on the pipe sealing device, and removing the sealing device from the pipe sealing device to permit fluid from the pressurised pipe to flow into the other pipe.

15. A method according to claim 14, wherein the other pipe is coupled to the pipe sealing device by means of a valve, which is movable between a closed position in which fluid is prevented from flowing from the pressurised pipe into the other pipe and an open position in which fluid flows from the pressurised pipe into the other pipe.
